# EUROPÄISCHE PATENTANMELDUNG

(11) **EP 0 984 121 A2**
(43) Veröffentlichungstag der Anmeldung: **08.03.2000**
(21) Anmeldenummer: 99114994.9
(22) Anmeldetag: 31.07.1999
(51) Int. Cl.: E05B 17/22, E05B 47/00, E05B 65/20, G01D 5/12

(54) **Antriebseinrichtung mit einem Stellantrieb**

(30) Priorität: 19.10.1998 DE 19848081; 01.09.1998 DE 19839706
(71) Anmelder: Mannesmann VDO Aktiengesellschaft, 60388 Frankfurt am Main (DE)
(72) Erfinder: Zintler, Albert, 64521 Gross-Gerau (DE); Stalter, Reinhard, 61250 Usingen (DE); Mücke, Wolfgang, 60437 Frankfurt (DE)
(74) Vertreter: Rassler, Andrea, Dipl.-Phys.

(57) **Zusammenfassung**

Die Erfindung betrifft eine Antriebseinrichtung, insbesondere eine Schließeinrichtung, mit einem Stellantrieb (1) zum Antreiben eines beweglichen Elementes (4) sowie einer Positionserfassungseinrichtung zur Erfassung der Position des beweglichen Elementes (4), wobei erfindungsgemäß vorgesehen ist, daß die Positionserfassungseinrichtung ein an dem beweglichen Element angebrachtes Magnetelement (18) sowie ein in der Nähe des Magnetelementes (18) angeordnetes Hall-Element (19) aufweist, wobei das Hall-Element (19) in einem elektronischen Baustein (17) integriert ist.

## Beschreibung

Die Erfindung betrifft eine Antriebseinrichtung mit einem Stellantrieb sowie einer Positionserfassungseinrichtung gemäß den Merkmalen des Oberbegriffes des Patentanspuches 1.

Aus dem amerikanischen Patent 5,240,296 ist eine solche Antriebseinrichtung bekannt, die hier als Schließeinrichtung für eine Tür eines Fahrzeuges ausgebildet ist, wobei ein als Hebel ausgebildetes bewegliches Element von einem Stellantrieb in zwei Stellungen verfahren werden kann, und der Hebel die Schließeinrichtung verriegeln und entriegeln kann.

Als Positionserfassungseinrichtung wird ein Potentiometer verwendet, dessen Leiterbahnen auf einer Leiterplatte aufgedruckt sind, wobei diese Leiterbahnen von Schleifern, die an dem Hebel befestigt sind, abgetastet werden. Je nach dem, in welcher Position sich der Hebel befindet, wird die Stellung 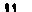 verriegelt" oder 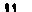 entriegelt" detektiert und weiterhin der Stellantrieb in Abhängigkeit der detektierten Position eingeschaltet beziehungsweise ausgeschaltet.

Die Wirkungsweise und die Ansteuerung des Stellantriebes sowie die Positionserfassung des beweglichen Elementes funktioniert an und für sich zufriedenstellend, so daß die gewünschten Positionen erkannt werden können.

Entscheidender Nachteil hierbei ist jedoch, daß die Positionserfassungseinrichtung den rauhen Umweltbedingungen, gerade wie sie in Fahrzeugen herrschen, ausgesetzt ist, wobei diese (hier sind zu nennen: Temperaturschwankungen, Feuchtigkeit, Staub und dergleichen) zu Fehlfunktionen der Positionserfassungseinrichtung führen können. Außerdem unterliegt eine als Potentiometer ausgebildete Positionserfassungseinrichtung einem Verschleiß, der gerade bei der Anwendung in Fahrzeugen, wo die Schließeinrichtung sehr häufig betätigt wird, auftritt. Hier könnte man daran denken, entsprechende Materialien, die einem nicht so hohen Verschleiß unterliegen, zu verwenden; diese sind jedoch in der Regel kostenintensiv und gerade bei einer Kostenreduktion bei Serienproduktionen nicht einsetzbar.

Des weiteren hat eine als Potentiometer ausgebildete Positionserfassungseinrichtung den Nachteil, daß sich an der Übergangsstelle Schleifer/Leiterbahn Übergangswiderstände einstellen können, die zu einer Verfälschung der angezeigten Position führen, so daß auch hier nicht immer zuverlässig die korrekte Position wiedergegeben wird. Eine korrekte Wiedergabe der Position ist aber gerade im Anwendungsfall der Schließeinrichtung unbedingt erforderlich, da sich zum Beispiel der Stellantrieb und damit die gesamte Schließeinrichtung im Zustand 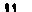 verriegelt" befinden kann, während die Positionserfassung 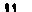 entriegelt" anzeigt, so daß dann der Stellantrieb überhaupt nicht angesteuert würde, da die Positionserfassungseinrichtung anzeigt, daß sich der Stellantrieb schon in der Stellung 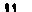 entriegelt" befindet und somit ein Öffnen der Tür möglich wäre.

Der Erfindung liegt daher die Aufgabe zugrunde, die eingangs geschilderte Antriebseinrichtung mit einem Stellantrieb und einer Positionserfassungseinrichtung derart zu verbessern, daß die geschilderten Nachteile vermieden werden, so daß sich eine zuverlässige Wirkungsweise bei einfachstem Aufbau ergibt.

Diese Aufgabe ist durch die Merkmale des Patentanspruches 1 gelöst.

Erfindungsgemäß ist vorgesehen, daß die Positionserfassungseinrichtung ein an dem beweglichen Element angebrachtes Magnetelement sowie ein in der Nähe des Magnetelementes angeordneten Hall-Element aufweist, wobei das Hall-Element in einem elektronischen Baustein integriert ist.

Zur Erfassung der Position des beweglichen Elementes macht man sich den physikalischen Hall-Effekt zunutze, der am Ende kurz beschrieben ist.

Da nunmehr das bewegliche Element und die Positionserfassungseinrichtung sich nicht mehr berühren, arbeitet diese Positionserfassungseinrichtung berührungslos und damit verschleißfrei, so daß dadurch die Funktion der Antriebseinrichtung über die gesamte eigene Lebensdauer oder über die gesamte Lebensdauer des Gegenstandes, in dem sie eingebaut ist (zum Beispiel ein Fahrzeug) zuverlässig arbeitet. Der Aufbau und die Montage der erfindungsgemäßen Antriebseinrichtung ist besonders einfach, da keine Ausrichtung zwischen dem Magnetelement und dem Hall-Element erfolgen muß und eine Annäherung in ausreichender Genauigkeit genügt, um die Funktion der Positionserfassungseinrichtung sicherzustellen. Außerdem entfällt das Aufbringen von Leiterbahnen auf der Leiterplatte sowie das Vorhandensein von Schleifern und Schleiferträgern eines Potentionmeters, die gerade dann besonders aufwendig sind, wenn eine Abtastung der Position über mehrere Umdrehungen des beweglichen Elementes erfolgen soll.

In Weiterbildung der Erfindung ist der elektronische Baustein als ASIC ausgebildet. Unter einem ASIC ist ein elektronischer Baustein zu verstehen, der bei der Herstellung oder durch Programmierung für seinen Einsatzzweck und die in Frage kommenden Aufgaben spezifiziert wurde. Ein ASIC beinhaltet Eingangs- und Ausgangsschaltungen, Speicher, Prozessoren, Überwachungen (zum Temperatur, Spannung, Kurzschluß und dergleichen), Sensoren (zum Beispiel das Hall-Element) und so weiter. Dies hat den Vorteil, daß ein integrierter Baustein auf kleinstem Platz zur Verfügung steht. Als weitere Vorteile sind die reduzierte Ruhestromaufnahme zu nennen, da nur solche Funktionen implementiert sind, die für den jeweiligen Einsatzzweck benötigt werden, und damit auch reduzierte Fertigungskosten. Der Test eines ASIC vereinfacht sich dadurch ebenfalls, da nicht alle Funktionen eines normalerweise verwendeten multifunktionalen Chips getestet werden müssen. Wichtig ist noch ein sehr guter Kopierschutz, da dem ASIC von außen nicht anzusehen ist, welche Bauteile er enthält und welche Funktionen mit ihm realisiert sind. Durch die Integration des Sensors steht somit ein sogenannter aktiver Sensor zur Verfügung, der ein schon ausgewertetes, gegebenenfalls gefiltertes, Signal zur Weiterverarbeitung zur Verfügung stellt. Durch die Signalverarbeitung am Erfassungsort können auch empfindliche und kleine Meßgrößen erfaßt, verstärkt und ausgewertet weitergegeben werden, so daß dadurch die Störempfindlichkeit reduziert wird. Dies ist gerade bei der Anwendung in Fahrzeugen von Bedeutung, da hier oft durch elektromagnetische Störungen Fehlfunktionen ausgelöst werden.

In Weiterbildung der Erfindung weist der elektronische Baustein eine Auswerteschaltung für die Ausgangssignale des Hall-Elementes und/oder eine Ansteuerschaltung zur Erzeugung von Ansteuersignalen für den Stellantrieb auf. Dadurch erhöht sich die kompakte Bauweise, da die Ansteuerschaltung sowie die Auswerteschaltung in dem elektronischen Baustein integriert ist. Weiterhin ist es von Vorteil, daß eine weitergehende Verkabelung entfallen kann, da der elektronische Baustein mit seiner Auswerteschaltung und seiner Ansteuerschaltung in räumlicher Nähe sowohl zu dem beweglichen Element als auch zu dem Stellantrieb angeordnet werden kann. Dadurch ergibt sich eine Antriebseinrichtung mit integriertem Stellantrieb und integrierter Sensorik, wobei zu dieser Antriebseinrichtung nur noch eine Verkabelung für die Stromversorgung und gegebenenfalls für weitere Signale, mit denen der Stellantrieb von außen angesteuert werden soll, verlegt werden muß.

Ein weiterer Vorteil für die Verwendung des elektronischen Bausteines innerhalb der Antriebseinrichtung sowie für die Integration der Auswerteschaltung und/oder der Ansteuerschaltung in dem elektronischen Baustein ist darin zu sehen, daß die Verbindung zwischen dem das Ausgangssignal in Abhängigkeit der Position liefernde Hall-Element und der Auswerteschaltung sowie die Verbindung zwischen der Ansteuerschaltung und dem Stellantrieb extrem kurz gehalten werden können, so daß Maßnahmen, die zur Verhinderung einer Einstrahlung einer Störstrahlung erforderlich wären, entfallen können. Damit entfällt nicht nur die Abschirmung gegen elektromagnetische Störstrahlung, sondern es erhöht sich auch die Zuverlässigkeit der gesamten Antriebseinrichtung.

In Weiterbildung der Erfindung ist der elektronische Baustein auf einer Leiterplatte, die insbesondere als flexible Leiterplatte ausgebildet ist, angeordnet, wobei die Leiterplatte in einem Gehäuse der Antriebseinrichtung eingesetzt ist.

Dies führt zu einer hohen Montagefreundlichkeit, da einerseits die Leiterplatte zumindest mit dem elektronischen Bausteinen und gegebenenfalls einer weiteren Verkabelung und weiteren Bausteine in einem ersten Schritt vormontiert werden kann, wobei andererseits in das Gehäuse schon das bewegliche Element, der Stellantrieb und weitere Funktionselemente der Antriebseinrichtung eingesetzt werden können, so daß nach diesem Einsetzen nur noch die Leiterplatte mit dem elektronischen Baustein montiert werden muß und damit die Montage der Antriebseinrichtung beendet ist. Dieser Montagevorgang ist wesentlich einfacher, da keine genaue Zuordnung von dem beweglichen Element zu der Positionserfassungseinrichtung erfolgen muß, wobei jedoch sichergestellt sein muß, daß der elektronische Baustein mit seinem Hall-Element in der Nähe des Magnetelementes, das an dem beweglichen Element befestigt ist, angeordnet wird. Die Leiterplatte in dem Gehäuse kann ein eigenständiges Bauteil sein, wohingegen es auch denkbar ist, daß die Leiterplatte erst in einen Gehäusedeckel eingesetzt und dann auf das Gehäuse aufgesetzt wird oder aber integraler Bestandteil des Gehäusedeckels ist. Hierbei wäre eine solche Herstellung denkbar, daß zunächst die Leiterplatte mit dem elektronischen Baustein hergestellt wird und anschließend zumindest diese beiden Bauteile mit Kunststoff in der Form des Gehäusedeckels umgeben (umspritzt) werden, so daß sowohl die Leiterplatte als auch der elektronische Baustein mit seinem Hall-Element vollkommen geschützt unter einer Kunststoffschicht liegen. Bei der Herstellung eines solchen Gehäusedeckels, wobei es sich auch um das Gehäuse an sich handeln kann, können auch schon Verbindungsmittel wie Stecker oder Buchsen oder dergleichen mit vorgesehen werden. Um die Verbindung zum Beispiel zwischen einem Stecker und dem elektronischen Baustein zu realisieren, muß es sich nicht zwangsläufig um eine Leiterplatte mit aufgebrachten Leiterbahnen handeln, so daß anstelle dessen auch in dem Kunststoff-Gehäusedeckel auch nur die Leiterbahnen, beispielsweise in Form von gestanzten Leiterbahnen, realisiert werden können. Eine flexible Leiterplatte ist besonders gut bei komplex gestalteten Gehäusen unterzubringen und besonders vorteilhaft bei Anwendungen, die Schwingungen und Vibrationen ausgesetzt sind, da diese besser von einer flexiblen als von einer starren Leiterplatte aufgenommen werden.

Als Alternativen zu Leiterplatten stehen Hybridbausteine oder sogenannte Lead-Frames zur Verfügung. Bei einem Hybridbaustein handelt es um eine elektronische Schaltung, die mehrere elektronische Bauteile (Widerstände, Kondensatoren, Prozessoren, Sensoren) beinhaltet. Dieser kann also schon für einen bestimmten Einsatzzweck beschaltet und verschaltet sein und muß nur noch in das Gehäuse eingesetzt und mit seiner Peripherie (insbesondere einer Stromversorgung) verkabelt werden.

Unter einem Lead-Frame ist ein Bauteil zu verstehen, das zunächst einen elektrisch nicht leitenden Träger, insbesondere aus Kunststoff, aufweist. Dieser Träger ist als weitestgehende ebene Fläche ausgebildet, kann aber zur Anpassung an den Einbauort gebogen, geknickt oder in sonstiger geeigneter Weise geformt sein. In dem Träger sind elektrisch leitende Bereiche, insbesondere Bahnen, eingelegt, die zum Beispiel aus Blechstanzteilen bestehen. Eine mögliche Herstellung eines Lead-Frame besteht darin, daß die Blechstanzteile in eine Form gelegt und mit Kunststoff umspritzt werden. An den Stellen, an denen sich ein elektrisches Bauteil auf dem Träger befindet, sind die betreffenden elektrisch leitenden Bereiche nach außen geführt und mit dem betreffenden Bauteil kontaktiert. Auch Stecker oder dergleichen können einstückig mit dem Träger ausgebildet sein oder als separates Bauteil ebenfalls kontaktiert werden. Somit steht also auch hier nach der Bestückung des Lead-Frames ein elektronischer Baustein zur Verfügung, der vor dem Einbau in das Gehäuse auf seine Funktionstüchtigkeit überprüft werden kann. Somit werden nur funktionstüchtige Bausteine in das Gehäuse eingebaut, so daß nach Fertigstellung der gesamten Antriebseinrichtung eine mögliche Fehlerquelle ausgeschlossen ist.

In Weiterbildung der Erfindung ist das Magnetelement in einer an einer Welle des beweglichen Elementes befestigten Magnetelement-Halterung angeordnet. Dies hat den Vorteil der einfachen Montage, so daß auf die Welle nur noch das Magnetelement mittels der Magnetelement-Halterung aufgesteckt werden muß, wobei auch andere Befestigungsmöglichkeiten (wie zum Beispiel Verkleben) denkbar sind. Die Verwendung der Magnetelement-Halterung hat darüber hinaus noch den Vorteil, daß mittels dieser Mag-netelement-Halterung Toleranzen, insbesondere in axialer Richtung, ausgleichbar sind. Außerdem kann ein und derselbe Magnet, insbesondere ein Dauermagnet, über diese Magnetelement-Halterung an verschiedenen Wellen oder sonstigen beweglichen Elementen, die unterschiedliche geometrische Formen haben, angebracht werden. Umgekehrt ist es natürlich auch denkbar, daß an ein und demselben beweglichen Element über die Magnetelement-Halterung unterschiedliche Magnete einsetzbar sind.

Wie schon eingangs beschrieben, ist eine besonders vorteilhafte Anwendung der erfindungsgemäßen Einrichtung bei einer Schließeinrichtung, insbesondere für ein Fahrzeug, gegeben, da hier rauhe Einsatzbedingungen herrschen, die mittels der erfindungsgemäßen Verwendung eines Hall-Elementes eliminiert werden können. Auch wenn dieses Anwendungsgebiet als besonders bevorzugt angesehen wird, sei noch darauf verwiesen, daß die Erfindung nicht auf dieses Anwendungsgebiet beschränkt ist und andere Anwendungen der erfindungsgemäßen Antriebseinrichtung, ohne den Erfindungsgedanken zu verlassen, denkbar sind.

Der Einsatz der erfindungsgemäßen Antriebseinrichtung bei einer Schließeinrichtung ist im folgenden beschrieben und anhand der Figuren erläutert.

Es zeigen:
- Figur 1:: den prinzipiellen Aufbau einer Schließeinrichtung,
- Figur 2:: die Anordnung der in Figur 1 gezeigten Elemente in einem Gehäuse,
- Figur 3:: einen Ausschnitt aus Figur 2, betreffend die Positionserfassungseinrichtung.

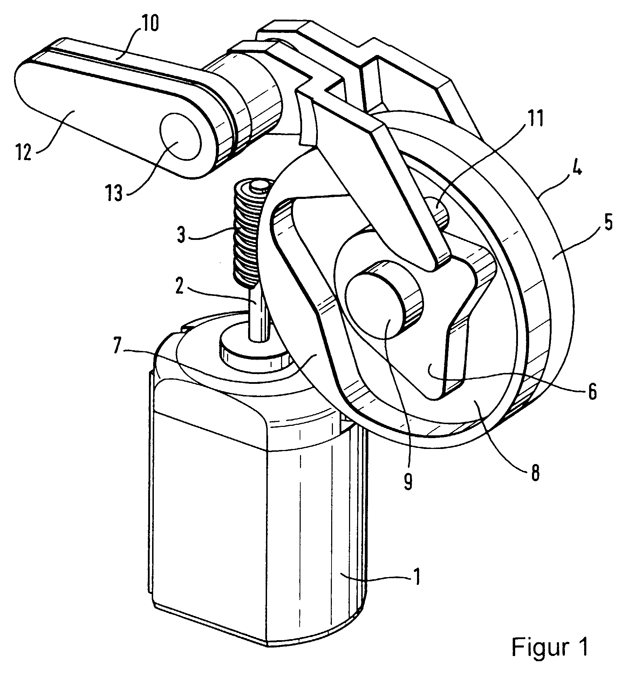

Figur 1 zeigt eine elektrisch betätigbare Schließeinrichtung mit einem Stellantrieb, der als Elektromotor 1 ausgebildet ist. Auf einer Welle 2 des Elektromotors 1 sitzt ein Schneckenrad 3, wobei von dem Elektromotor 1 ein als Steuerscheibe 4 ausgebildetes Übertragungselement angetrieben wird. Ein Außenumfang 5 der Steuerscheibe 4 ist mit Zähnen (in Figur 1 nicht dargestellt) versehen, die mit dem Schneckenrad 3 kämmen und somit ein Untersetzungsgetriebe bilden. Wenigstens eine Seite der Steuerscheibe 4 weist Innenerhebungen 6 und Außenerhebungen 7 auf, die einen Zwischenbereich bilden. Die Innen- und Außenerhebungen 6, 7 bilden einen Konturverlauf zur Einstellung verschiedener Funktionen der Schließeinrichtung, wie dies später noch beschrieben wird.

Die Steuerscheibe 4 ist auf einer Welle 9 drehbar gelagert. Mit der Bezugsziffer 10 ist ein erster Hebel bezeichnet, dessen der Steuerscheibe 4 zugeordnetes Ende einen Zapfen 11 trägt, der in den Zwischenbereich 8 hineinragt und an den Konturen der Innenerhebungen 6 und Außenerhebungen 7 zur Anlage kommen kann. Weiterhin ist in Figur 1 noch ein zweiter Hebel 12 gezeigt, der mit dem ersten Hebel 10 auf einer gemeinsamen Welle 13 gelagert ist und unabhängig von dem ersten Hebel 10 mittels Innenerhebungen und Außenerhebungen auf der anderen Seite der Steuerscheibe 4 einstellbar ist. An dieser Stelle sei erwähnt, daß mit der in Figur 1 gezeigten Ausführungsform die Betätigung des Türinnengriffes und des Türaußengriffes in Abhängigkeit der Stellungen der Hebel 10 und 12 auf Schloßelemente wie beispielsweise Sperrklinke/Drehfalle übertragen werden kann oder nicht. Denkbar ist auch, einer einzelnen Handhabe (wie zum Beispiel Türinnengriff) einen eigenen Elektromotor 1 mit eigener Steuerscheibe 4 und Innenerhebungen 6 und Außenerhebungen 7 auf nur einer Seite und auch nur einem einzigen Hebel zuzuordnen. Da die Ausbildung der Schloßelemente die Ausgestaltung des Stellantriebes nicht berührt, wurde auf eine Darstellung verzichtet. Zur Verdeutlichung sei erwähnt, daß eine Handhabe über Bowdenzüge mit einem weiteren Hebel in Verbindung steht, wobei dieser weitere Hebel beispielsweise von dem ersten Hebel 10 betätigbar ist. Der weitere Hebel wirkt auf Schloßelemente wie zum Beispiel auf die mit einer Drehfalle zusammenwirkenden Sperrklinke. In seiner einen Stellung bewirkt dann der erste Hebel 10, daß der weitere Hebel bei Betätigung der Handhabe auf die Sperrklinke wirken kann, während in seiner weiteren Stellung der erste Hebel 10 derart auf den weiteren Hebel wirkt, daß die Betätigung der Handhabe nicht auf die Sperrklinke wirken kann (Leerhub).

Diese in Figur 1 gezeigte Ausführungsform erlaubt also eine extrem flache Bauweise, die sämtliche Funktionen einer elektrisch betätigbaren Schließeinrichtung, wie 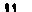 Entriegelung", 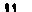 (Zentral-)Verriegelung" und 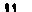 Diebstahlsicherung" (gegebenenfalls auch 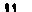 Kindersicherung"), ermöglicht. Durch entsprechende Ansteuerung des Elektromotores 1 und die Bewegung der Hebel 10 und 12 in Abhängigkeit der Konturen der Steuerscheibe 4 werden mit nur einem Stellantrieb (Elektromotor 1) die Schloßfunktionen für zwei Handhaben (wie zum Beispiel Türinnen- und Türaußengriff) realisiert

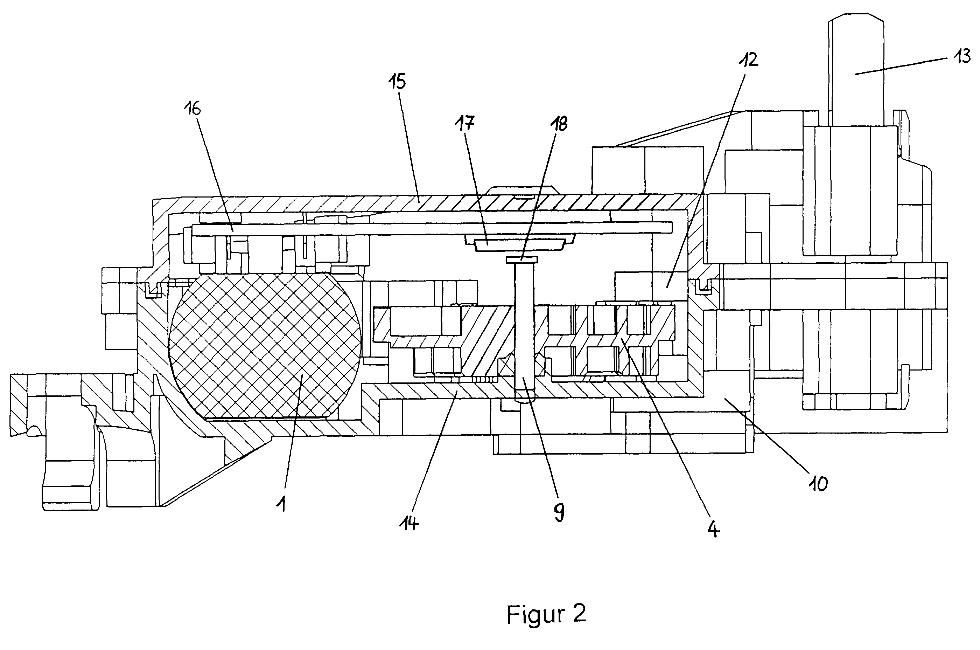

Figur 2 zeigt die Anordnung der in Figur 1 gezeigten Elemente in einem Gehäuse 14. Dieses Gehäuse 14 ist bei Betrachtung der Figur 2 nach oben offen und wird von einem Gehäusedeckel 15 dichtend verschlossen. Dazu ist an der Verbindungsstelle zwischen dem Gehäuse 14 und dem Gehäusedeckel 15 umlaufend eine nicht gezeigte und bezeichnete Dichtung vorgesehen, so daß die in Figur 1 gezeigten Elemente und weitere Elemente in dem Gehäuse 14, abgedeckt durch den Gehäusedeckel 15, feuchtigkeits- und staubdicht untergebracht sind.

In das Gehäuse 14 ist eine Leiterplatte 16 eingesetzt, wozu entweder an dem Gehäuse 14 oder an dem Gehäusedeckel 15 oder an beiden entsprechende Mittel (wie zum Beispiel Zapfen oder dergleichen) vorgesehen sind, um die Leiterplatte 16 zu halten. So wird die Leiterplatte 16 beispielsweise in entsprechende Aussparungen eingesetzt oder die Leiterplatte 16 weist Bohrungen auf, mit denen Sie über Zapfen in dem Gehäuse 14 geführt wird, wobei indem Gehäusedeckel 15 entsprechende Gegenzapfen vorgesehen sind, die die Leiterplatte 16 in ihrer Lage fixieren.

Die Leiterplatte 16 trägt im Bereich des beweglichen Elementes, dessen Position erfaßt werden soll (hier die Welle 9 der Steuerscheibe 4) einen elektronischen Baustein 17, der elektrisch über Fahnen mit der Leiterplatte 16 und deren nicht gezeigten Leiterbahnen verbunden ist. Der elektronische Baustein 17 kann gegebenenfalls auch mechanisch auf der Leiterplatte 16 fixiert sein. An dem dem elektronischen Baustein 17 zugewandten Ende trägt die Welle 9 ein Magnetelement 18, so daß eine Drehung der Welle 9 auch eine Drehung des Magnetelementes 18 mit seinem Nord- und Südpol bewirkt, wobei diese Drehung von dem elektronischen Baustein 17 erfaßt und ausgewertet wird. Diese Erfassung und Auswertung ist nun im folgenden beschrieben.

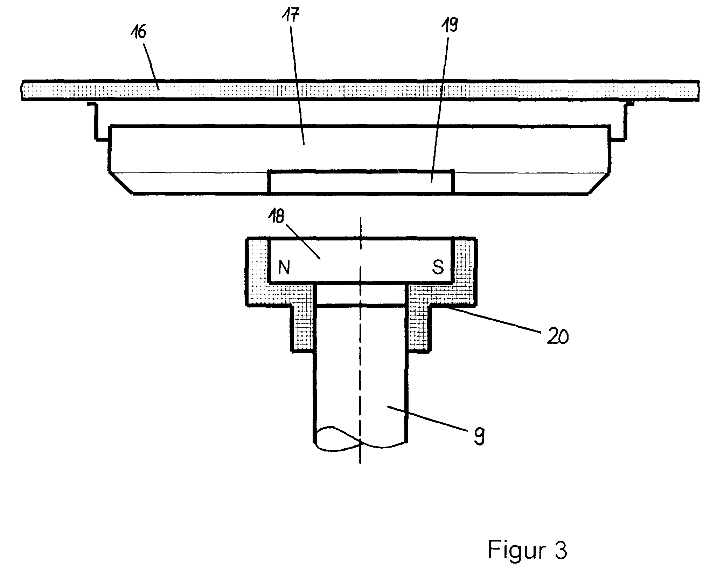

Die Figur 3 zeigt eine Detailansicht des elektronischen Bausteines 17 und des Magnetelementes 18. In dem elektronischen Baustein 17, in dem eine Auswerteschaltung, die nicht bezeichnet ist, untergebracht ist, ist auch ein Hall-Element 19 angeordnet, das auf die Drehung des Magnetelementes 18 reagiert. Das Magnetelement 18 ist ein Dauermagnet mit einem Nordpol (N) und einem Südpol (S). Durch die Drehung des Magnetelementes 18 wird der Stromfluß in dem Hall-Element 19 verändert und eine sogenannte Hall-Spannung erzeugt, so daß dieses Hall-Element 19 als Ausgangssignal ein digitales Signal oder auch ein kontinuierliches Signal (Signalfolgen) bei mehreren Drehungen des Magnetelementes 18 liefert. Dieses Ausgangssignal des Hall-Elementes 19 wird von der Auswerteschaltung ausgewertet, wobei dies beispielsweise durch Zählen der Ausgangsimpulse des Hall-Elementes 19 erfolgen kann. Diese ausgewertete Ausgangssignal kann dann in ein Ansteuersignal für den Stellantrieb (Elektromotor 1) verwendet werden, wobei der Elektromotor 1 beispielsweise so lange angesteuert wird, bis eine weitere Position erreicht wird. Ist diese erreichte Position erkannt worden, wird der Elektromotor 1 abgeschaltet. Mittels der in dem elektronischen Baustein 17 ingetrierten Auswerteschaltung und Ansteuerschaltung kann auch eine Vorbremsung für den Elektromotor 1 realisiert werden, so daß dann, wenn eine Vorposition zu einer bestimmten Position erfaßt wurde, die Steuerung für den Elektromotor 1 heruntergeregelt werden kann, so daß der Elektromotor 1 nicht erst bei Erreichen seiner vorgegebenen Position abgeschaltet wird, sondern diese langsam erreicht und ein Überschwingen verhindert wird. Auf diese Art und Weise kann ein aufwendiges Regeln der Ansteuerung für den Elektromotor 1 zur Erreichung seiner Position entfallen.

Auf der Welle 9 ist noch eine Magnetelement-Halterung 20 aufgesetzt, die das Magnetelement 18 aufnimmt. Die beispielsweise aus Kunststoff hergestelle Magnetelement-Halterung 20 verbindet durch Klemmwirkung das Magnetelement 18 mit dem Ende der Welle 9, wobei eine axiale Verschiebung des Magnetelementes 18 in Richtung des Hall-Elementes 19 oder von diesem weg möglich ist, um eine axiale Einstellung der Lage des Hall-Elementes 19 zu dem Magnetelement 18 zwecks Toleranzausgleich zu ermöglichen. Außerdem wird durch die distanzierte Anordnung des Magnetelementes 18 zu dem Ende der Welle 9 eine Magnetisierung der aus magnetischen Material bestehenden Welle 9 weitestgehend vermieden, was zu unerwünschten Effekten führen könnte.

Weiterhin ist Figur 2 noch gezeigt, daß sowohl der elektronische Baustein 17 als auch das Magnetelement 18 vor äußeren Einflüssen geschützt in dem Gehäuse 14 mit dem Gehäusedeckel 15 angeordnet ist. Sollte eine solche geschützte Anordnung aufgrund der geometrischen Verhältnisse beziehungsweise des Bauraumes nicht möglich sein, kann auch ein Schutzgehäuse um das Magnetelement 18 und den elektronischen Baustein 17 herum vorgesehen werden. Denkbar wäre auch eine Anordnung, bei der in Figur 2 die Leiterplatte 16 eine Ausnehmung aufweist, in die Magnetelement 18 hereinragt und dann der elektronische Baustein 17 bei Betrachtung der Figur 2 oberhalb der Leiterplatte 16 angeordnet ist. Dies führt zu einer weiteren vorteilhaften Bauraumreduzierung.

An dieser Stelle soll noch kurz die prinzipielle Wirkungsweise eines Hall-Elementes und seine Auswertung beschrieben werden. Das Hall-Element erhält einen Längsstrom I eingeprägt. Ein Magnet, der von einem beweglichen Betätigungselement betätigbar ist oder an diesem fest angeordnet ist, erzeugt ein Magnetfeld B, das auf das Hall-Element wirkt. Die sich aufgrund des Annähern beziehungsweise entfernen des Magnetfeldes B des Magneten von dem Hall-Element einstellende sogenannte Hall-Spannung U_{H} wird an dem Hall-Element abgenommen und einer Auswerteeinheit zugeführt. Die Auswerteeinheit weist eine externe Spannungsversorgung auf, die sie über entsprechende Leitungen (zum Beispiel Spannungsleitung und Masseleitung) erhält. Weiterhin ist eine Signalleitung vorgesehen, so daß die ausgewertete Hall-Spannung U_{H} zur weiteren Verarbeitung beispielsweise über die Signalleitung und die Masseleitung zur Verfügung gestellt werden kann. Hierbei handelt es sich also um eine sogenannte intelligente Auswerteeinheit, die ein schon aufbereitetes Ausgangssignal zur Verfügung stellt. Zur Erzeugung des eingeprägten Längsstromes I ist eine Stromquelle, insbesondere in der Auswerteeinheit vorgesehen.

### Bezugszeichenliste:

- 1.: Elektromotor
- 2.: Welle
- 3.: Schneckenrad
- 4.: Steuerscheibe
- 5.: Außenumfang
- 6.: Innenerhebungen
- 7.: Außenerhebungen
- 8.: Zwischenbereich
- 9.: Welle
- 10.: erster Hebel
- 11.: Zapfen
- 12.: zweiter Hebel
- 13.: gemeinsame Welle
- 14.: Gehäuse
- 15.: Gehäusedeckel
- 16.: Leiterplatte
- 17.: elektronischer Baustein
- 18.: Magnetelement
- 19.: Hallelement
- 20.: Magnetelement-Halterung

## Patentansprüche

1. Antriebseinrichtung mit einem Stellantrieb zum Antreiben eines beweglichen Elementes sowie einer Positionserfassungseinrichtung zur Erfassung der Position des beweglichen Elementes, **dadurch gekennzeichnet**, daß die Positionserfassungseinrichtung ein an dem beweglichen Element angebrachtes Magnetelement (18) sowie ein in der Nähe des Magnetelementes (18) angeordnetes Hall-Element (19) aufweist, wobei das Hall-Element (19) in einem elektronischen Baustein (17) integriert ist.

2. Antriebseinrichtung nach Anspruch 1, **dadurch gekennzeichnet**, daß der elektronische Baustein (17) als ASIC ausgebildet ist.

3. Antriebseinrichtung nach Anspruch 1 oder 2, **dadurch gekennzeichnet**, daß der elektronische Baustein (17) eine Auswerteschaltung für die Ausgangssignale des Hall-Elementes (19) und/oder eine Ansteuerschaltung zur Erzeugung von Ansteuersignalen für den Stellantrieb aufweist.

4. Antriebseinrichtung nach einem der Ansprüche 1 bis 3, **dadurch gekennzeichnet**, daß der elektronische Baustein (17) auf einer Leiterplatte (16), insbesondere einer flexiblen Leiterplatte, angeordnet ist, wobei die Leiterplatte (16) in einem Gehäuse (14) der Antriebseinrichtung eingesetzt ist.

5. Antriebseinrichtung nach einem der Ansprüche 1 bis 3**, dadurch gekennzeichnet**, daß der elektronische Baustein (17) als Hybridbaustein ausgebildet ist, wobei der Hybridbaustein in einem Gehäuse (14) der Antriebseinrichtung eingesetzt ist.

6. Antriebseinrichtung nach einem der Ansprüche 1 bis 3, **dadurch gekennzeichnet**, daß der elektronische Baustein (17) auf einem Lead-Frame angeordnet ist, wobei der Lead-Frame in einem Gehäuse (14) der Antriebseinrichtung eingesetzt ist.

7. Antriebseinrichtung nach einem der Ansprüche 1 bis 3, **dadurch gekennzeichnet**, daß der elektronische Baustein (17) auf einer Leiterplatte (16) angeordnet ist, wobei die Leiterplatte in einem Gehäusedeckel (15) für ein Gehäuse (14) der Antriebseinrichtung eingesetzt oder Bestandteil des Gehäusedeckels (15) ist.

8. Antriebseinrichtung nach einem der vorhergehenden Ansprüche, **dadurch gekennzeichnet**, daß das Magnetelement (18) in einer an einer Welle (9) des beweglichen Elementes befestigten Magnetelement-Halterung (20) angeordnet ist.

9. Antriebseinrichtung nach einem der vorhergehenden Ansprüche, **dadurch gekennzeichnet**, daß die Antriebseinrichtung als Schließeinrichtung, insbesondere für ein Fahrzeug, ausgebildet ist.

10. Antriebseinrichtung nach Anspruch 8 oder 9, **dadurch gekennzeichnet**, daß das bewegliche Element eine Steuerscheibe (4) zur Einstellung von Funktionsstellungen der Schließeinrichtung ist.

11. Antriebseinrichtung nach einem der vorhergehenden Ansprüche, **dadurch gekennzeichnet**, daß der Stellantrieb als ein Elektromotor (1) ausgebildet ist.

12. Antriebseinrichtung nach einem der vorhergehenden Ansprüche, **dadurch gekennzeichnet**, daß zumindest das Magnetelement (18) in einem das Magnetelement (18) umgebenden Schutzgehäuse, insbesondere dem Gehäuse (4), untergebracht ist.
